# EUROPEAN PATENT APPLICATION

(11) **EP 2 328 301 A1**
(43) Date of publication of application: **01.06.2011**
(21) Application number: 09812649.3
(22) Date of filing: 04.09.2009
(51) Int. Cl.: H04L 12/24

(54) **METHOD AND APPARATUS FOR MANAGING THE AUTHORITY IN WORKFLOW COMPONENT BASED ON AUTHORITY COMPONENT**

(30) Priority: 10.09.2008 CN 200810119784
(71) Applicant: ZTE Corporation, Shenzhen, Guangdong 518057 (CN)
(72) Inventor: YAN, Quanwen, Shenzhen Guangdong 518057 (CN); LV, Huawei, Shenzhen Guangdong 518057 (CN)
(74) Representative: Tafjord, Harald
(86) International application number: PCT/CN2009/073757
(87) International publication number: WO 2010/028583

(57) **Abstract**

A method and apparatus for managing purview in a workflow component based on a purview component is provided in the present invention, belonging to the application field of information technology. The method comprises: when using the workflow component to design a template, establishing a mapping relationship between a node in a workflow module and resource in the purview component; if the node is an automatic node and operations on service object are defined, performing authentication according to the resource in the purview component to which the node is mapped, thereby the dynamic purview management varying with demands is implemented; if the node is a human task node, obtaining users with purview of the resource from the purview component according to the resource in the purview component to which the node is mapped, and distribute the tasks, so as to make the users define the human task distribution by themselves along with the service changes and to improve the flexibility of the workflow system.

## Description

### Technical Field

The present invention relates to the application field of information technology, and more especially, to a method and apparatus for managing the purview in workflow component based on purview component in a large distributed system based on the component development.

### Background of the Related Art

With the development of information technology, the computer application system has been taking more responsibilities and works to improve people's work efficiency. Therefore, along with the computer application system becoming more and more huge and complicated, the componentization development technology is more and more popularized.

In an application system, there generally exists a purview component to control the system purview. A most common case is that different roles access and control different menus in the system, for example, in an application system, the system manager rather than ordinary users can access the management menu in the system. A system might have more complicated purview control requirement; for example, for some sensitive data, the reading purview thereof is strictly limited to be owned by few people, and the modification purview thereof is owned by even fewer people.

The purview control of the workflow component in an application system is basically processed inside the workflow component, which will increase the procedure of integration when integrating the applications so as to make the purview mechanism of the workflow and that of the application system work together. Moreover, for the end users, the system has more than one purview entrance, which will bring confusion in understanding. For example, for the reading and updating purview control of some service object, if there is a set of purview mechanism within the workflow component and the application system itself also has an purview component, thus configuration should be made in two positions, which is not desirable for users apparently.

The existing workflow purview control technology in a workflow management system implements a series of dynamic role management sub-modules by designing, the dynamic role purview mechanism of the workflow procedure and operation, besides of the strategy aiming to the static role purview, is added in the implementation strategy of the process purview, since only the dynamic role is proposed to control the purview of the human task nodes in the workflow and the dynamic role module is a module in the workflow, it cannot, however, be seamlessly combined with other purview components in the application system, moreover, the purview of the human task nodes rather than that of the automatic nodes can be controlled in the prior art, furthermore, the users cannot define the human task distribution by themselves according to the service change.

### Summary of the Invention

In order to solve the above problem, the purpose of the present invention is to provide a method and apparatus for managing purview in a workflow component based on an purview component, thereby implementing the dynamic purview management according to the demands and letting the users define the human task distribution by themselves according to the service change, thus improving the flexibility of the workflow system.

In order to achieve the above purpose, an embodiment of the present invention provides a method for managing purview in a workflow component based on a purview component, the method comprises:
when using the workflow component to design a template, establishing a mapping relationship between resource in the purview component and a node in a workflow module; and
if said node is an automatic node and operation on service object is defined, performing authentication according to the resource in the purview component to which the node is mapped.

Preferably, the method further comprises: if said node is a human task node, obtaining users with purview of the resource from the purview component according to the resource in the purview component to which the node is mapped, and distributing tasks.

Preferably, the method further comprises: modifying purview assignment of the resource in said purview component at anytime of system operation to meet changes of a service.

Preferably, the method further comprises: defining resource, operation, permission, role and user/user group in said purview component.

An embodiment of the present invention also provides an apparatus for managing purview in a workflow component based on a purview component, and the apparatus comprises:
a mapping module, configured to establish a mapping relationship between resource in the purview component and a node in said workflow module when using said workflow component to design a template; and
a management module, configured to perform authentication according to the resource in the purview component to which the node is mapped when the node is an automatic node and operations on a service object is defined.

Preferably, said management module is further configured to acquire users with purview of the resource from the purview component according to the resource in the purview component to which the node is mapped, and to distribute tasks.

Preferably, the apparatus further comprises: a modification module, configured to modify the purview assignment of the resource in the purview component at anytime of system operation to meet changes of a service.

Preferably, the apparatus further comprises: a configuration module, configured to define resource, operation, permission, role and user/user group in said purview component.At least one of the above technical schemes has the following beneficial effects: by managing the purview in the workflow based on the purview component and identifying the human task or automatic node in the workflow and mapping it to the resource in the purview component, let the users define and modify the purview assignment among the resource in the purview component, so as to achieve the dynamic purview management in the workflow component and human task distribution defined by the users and to uniform the purview management entrances of the application system.

### Brief Description of Drawings

FIG. 1 is a flow chart of the method for managing the purview in the workflow component based on the purview component in accordance with an embodiment of the present invention;
FIG. 2 is an illustration of defining the system purview in the purview component in accordance with an embodiment of the present invention;
FIG. 3 is an illustration of establishing the mapping relationship between the workflow component and the purview component when defining the workflow module in accordance with an embodiment of the present invention;
FIG. 4 is an illustration of the workflow component cooperating with the purview component in accordance with an embodiment of the present invention; and
FIG. 5 is a structure of the apparatus for managing the purview in the workflow component based on the purview component in accordance with an embodiment of the present invention.

### Preferred Embodiments of the Present Invention

In order to clarify the purpose, technical scheme and advantages of the embodiments of the present invention, embodiments of the present invention will be described in further detail with combination of the embodiments and accompanying figures. Here, the exemplary embodiments and description are used to illustrate rather than limit the present invention.

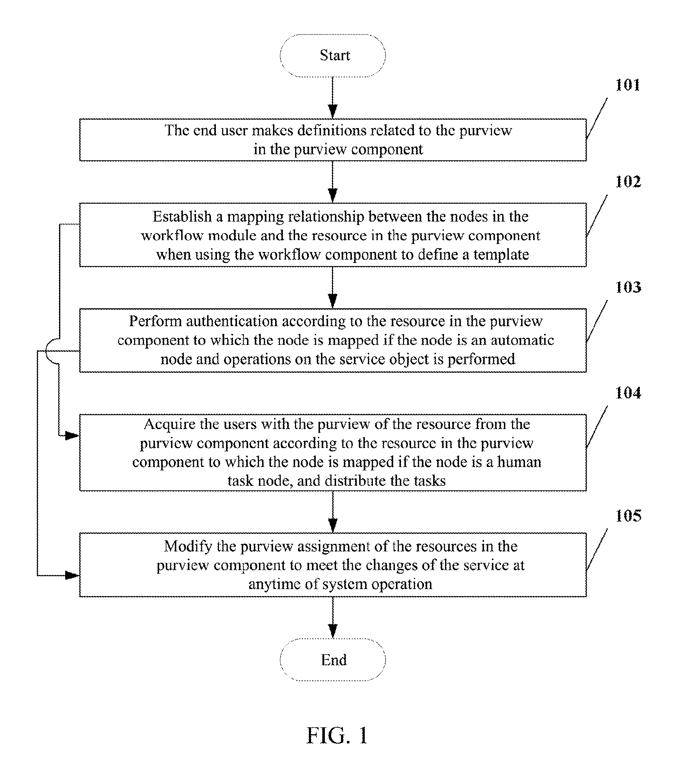

As shown in FIG. 1, it is a flow chart of the method for managing the purview in the workflow component based on the purview component, and it comprises the following specific steps:

Step 101, the end user makes definitions related to the purview in the purview component;

That is, define a plurality of data models, including resource, operation, permission, role, and user/user group, in the purview component, where the resource is the object, such as a certain menu or an object of payroll service, whose purview is required to be controlled; the operation means the operation on the resource, generally comprising: access, read, update and delete etc.; the permission indicates the combination of resource and operation (resource + operation), for example, an access plus a certain menu composes a permission; the role refers to the role defined in a system, and from the standpoint of data model, the relationship between role and permission is multiple-to-multiple, that is, one permission can be assigned to many roles, and vice versa.

With the above data model, the following logic can be obtained: with a known resource, the permission defined to the resource can be obtained, thus the role to which the permission is assigned can be obtained, and the user/user group which has this role can be obtained. Briefly, with a known resource, that which users will perform what operations to the resource can be finally obtained.

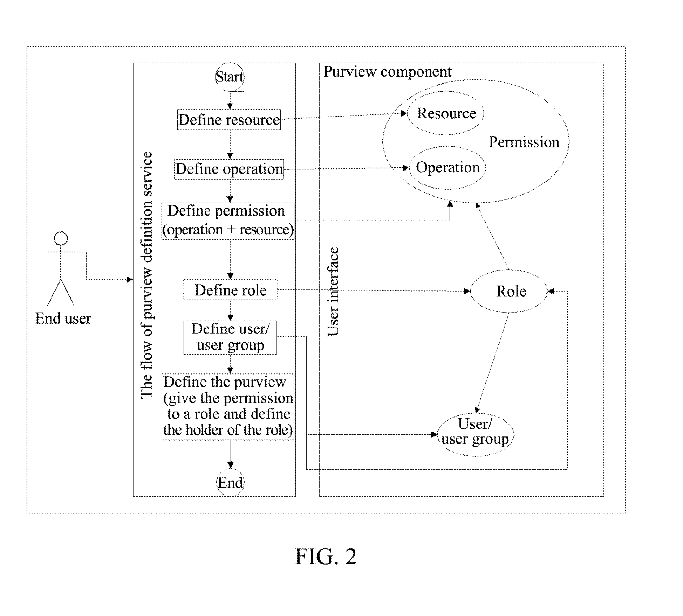

Finally, the users can flexibly configure the system purview according to the flow chart of defining the resource > defining operation > defining the permission > defining the role > defining the user/user group > defining the purview. Refer to FIG. 2, it illustrates the flow chart of flexibly defining the system purview in the purview component from end users' point of view and the data model in the background.

Step 102: establish a mapping relationship between the resource in the purview component and the nodes in the workflow module when using the workflow component to design a template, and then proceed to step 103 or step 104;

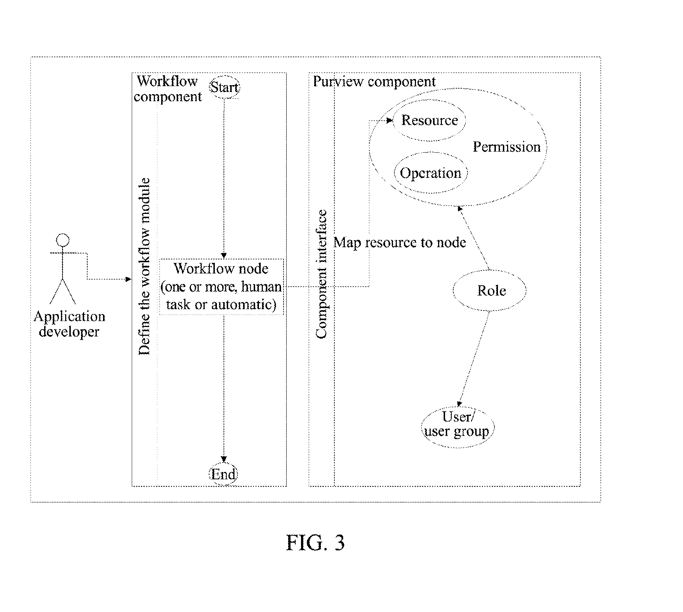

That is, an application developer establishes a mapping relationship between the nodes in the workflow module and the resource in the purview component via the component interface in the purview component when using the workflow component to design a module, referring to FIG. 3. And then proceed to FIG. 103 or FIG. 104, depending on the type of the node, wherein the type of the node can be human task or automatic.

Step 103, if the node is an automatic node and operations are performed to the service object, perform authentication according to the resource in the purview component to which the node is mapped, and then proceed to step 105;

Step 104, if the node is a human task node, acquire the users with this purview of the resource from the purview component according to the resource in the purview component to which the node is mapped, and distribute tasks, and then proceed to step 105;

Step 105, to meet the changes of the service, modify the purview assignment of the resource in the purview component at anytime of system operation.

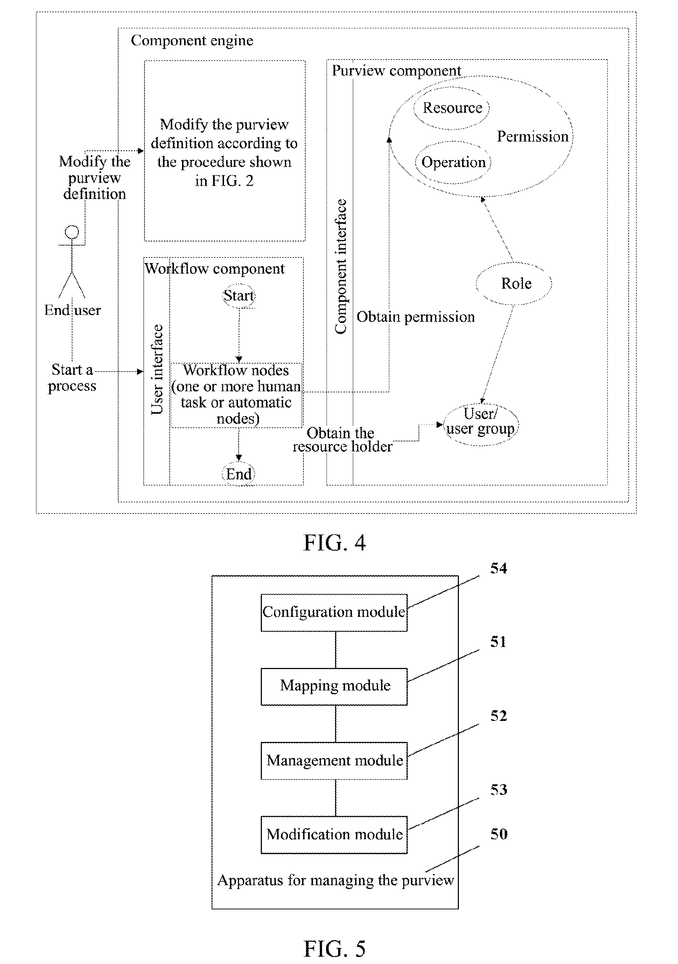

That is, the users modify the purview assignment of the resource in the purview component at anytime of system operation to meet the changes of the service, and these changes can be dynamically embodied in the users having the purview of the resource after modification when the engine runs, that is because the workflow node is mapped to the resource. Since all modifications can be embodied when the engine of the workflow runs, the users can truly define the distribution of the human tasks by themselves according to the service needs. Refer to FIG. 4, and it illustrates how the workflow component and the purview component work together from the standpoints of the end users under the definition by the users during the system operation.

From the above technical scheme, the users can define and modify the purview of the resource in the purview component to achieve the dynamic purview management in the workflow component and the human task distribution defined by the users and to uniform the purview management entrance of the application system by managing the purview in the workflow based on the purview component, identifying the human or automatic node in the workflow, and mapping it to the resource in the purview component.

In order to achieve the above embodiment of the method, another embodiment of the present invention also provides an apparatus for managing the purview in the workflow component based on the purview component. It should also note first that, since the following embodiment is used to achieve the abovementioned method embodiment, this apparatus is configured to achieve each step of the above method, the present invention, however, is not limited to the following embodiment, any apparatus that can achieve the above method should be in the scope of the claims of the present invention. Moreover, in the following description, the content same to the above method is omitted to save the page space.

Refer to FIG. 5, it is a structure of the apparatus for managing the purview in the workflow component based on the purview component in accordance with an embodiment of the present invention, and the purview management apparatus 50 comprises:

Mapping module 51, used to establish a mapping relationship between the nodes in the workflow module and the resource in the purview component when using the workflow component to design a template;

Managing module 52, used to perform authentication according to the resource in the purview component to which the node is mapped if the node is an automatic node and operations on the service object is performed.

The above management module 52 is also used to acquire the users with this purview of the resource from the purview component according to the resource in the purview component to which the node is mapped and to distribute the tasks.

In another embodiment of the present invention, the purview management apparatus 50 also comprises :
modification module 54, used to modify the purview assignment of the resource in the purview component at anytime of system operation to meet the changes of the service.

In another embodiment of the present invention, the purview management apparatus 50 also comprises :
configuration module 54, used to define resource, operation, permission, role, and user/user group in said purview component.

From the above technical scheme, by managing the purview in the workflow based on the purview component, identifying the human or automatic node in the workflow, and mapping it to the resource of the purview component, the users can define and modify the purview assignment in the purview component, so as to achieve the dynamic purview management in the workflow component and the human task distribution defined by the users, and to uniform the purview management entrance of the application system.

The above description is only preferred embodiments of the present invention, and it should be pointed out that, for those skilled in the field, the description of the above scheme can be modified or improved. Without departing from the spirit and essence of the present invention, all these kinds of modification or variations should belong to the scope of the claims of the present invention.

### Industrial Applicability

The method and apparatus for purview management provided in the present invention manage the purview in the workflow based on the purview component, identify the human task or automatic node in the workflow and map it to the resource in the purview component, so as to let the users define and modify the purview assignment of the resource in the purview component to achieve the dynamic purview management in the workflow component and human task distribution defined by the users and to uniform the purview management entrance of the application system.

## Claims

1. A method for managing purview in a workflow component based on a purview component, said method comprising:
when using the workflow component to design a template, establishing a mapping relationship between resource in the purview component and a node in a workflow module; and
if said node is an automatic node and operation on service object is defined, performing authentication according to the resource in the purview component to which the node is mapped.

2. A method of claim 1, said method further comprising:
if said node is a human task node, obtaining users with purview of the resource from the purview component according to the resource in the purview component to which the node is mapped, and distributing tasks.

3. A method of claim 1, said method further comprising:
modifying purview assignment of the resource in said purview component at anytime of system operation to meet changes of a service.

4. A method of claim 1, said method further comprising:
defining resource, operation, permission, role and user/user group in said purview component.

5. An apparatus for managing purview in a workflow component based on a purview component, said apparatus comprising:
a mapping module, configured to establish a mapping relationship between resource in the purview component and a node in said workflow module when using said workflow component to design a template; and
a management module, configured to perform authentication according to the resource in the purview component to which the node is mapped when the node is an automatic node and operations on a service object is defined.

6. An apparatus of claim 5, wherein, said management module is further configured to acquire users with purview of the resource from the purview component according to the resource in the purview component to which the node is mapped, and to distribute tasks.

7. An apparatus of claim 5, said apparatus further comprising:
a modification module, configured to modify the purview assignment of the resource in the purview component at anytime of system operation to meet changes of a service.

8. An apparatus of claim 5, said apparatus further comprising:
a configuration module, configured to define resource, operation, permission, role and user/user group in said purview component.
